(19) Europäisches Patentamt
European Patent Office
Office européen des brevets

(11) **EP 3 708 291 B1**

(12) **EUROPEAN PATENT SPECIFICATION**

(45) Date of publication and mention of the grant of the patent:
**05.01.2022 Bulletin 2022/01**

(51) Int Cl.:
***B23K 35/26*** *(2006.01)*    ***C22C 13/00*** *(2006.01)*

(21) Application number: **19839827.3**

(22) Date of filing: **28.06.2019**

(86) International application number:
**PCT/JP2019/025913**

(87) International publication number:
**WO 2020/021967 (30.01.2020 Gazette 2020/05)**

(54) **SOLDERING ALLOY AND SOLDER JOINT**

LÖTLEGIERUNG UND LÖTVERBINDUNG

ALLIAGE DE SOUDAGE ET JOINT À BRASURE TENDRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.07.2018 JP 2018138915**

(43) Date of publication of application:
**16.09.2020 Bulletin 2020/38**

(73) Proprietor: **Senju Metal Industry Co., Ltd.**
**Tokyo 120-8555 (JP)**

(72) Inventors:
- **SAKAMOTO Takeshi**
  **Tokyo 120-8555 (JP)**
- **KOGA Shunsuke**
  **Tokyo 120-8555 (JP)**
- **TAGUCHI Toshihiko**
  **Tokyo 120-8555 (JP)**

(74) Representative: **Zimmermann & Partner Patentanwälte mbB**
**Postfach 330 920**
**80069 München (DE)**

(56) References cited:
| | |
|---|---|
| **EP-A1- 1 468 777** | **WO-A1-2012/131861** |
| **WO-A1-2014/002283** | **WO-A1-2014/170963** |
| **JP-A- 2004 261 863** | **JP-A- 2004 261 863** |
| **JP-A- 2005 246 480** | **JP-A- 2007 237 252** |
| **JP-A- 2007 237 252** | **JP-B1- 6 323 606** |
| **US-A1- 2009 304 545** | |

- **Japanese Standards Association: "JIS Z 3198-1 Test methods for lead-free solders - Part 1: Methods for measuring of melting temperature ranges", , 31 December 2003 (2003-12-31), pages 1-10, XP055795281, Retrieved from the Internet: URL:http://gost-snip.su/download/1jis_z_31 98_1_2003_test_methods_for_lead_free_solde rs_part_1 [retrieved on 2021-04-14]**

**Description**

BACKGROUND OF THE INVENTION

Technical Field

The present invention relates to a solder alloy and a solder joint having high tensile strength and suppressing generation of elution of Ni and voids at a bonded interface.

Background Art

In recent years, electronic devices have been required to have higher integration, larger capacity and higher speed. For example, a semiconductor package such as a QFP (Quad Flat Package) is used, and it has been attempted to achieve higher integration and higher functionality at a semiconductor chip level. In manufacture of QFP, a packaging process of die bonding a silicon chip cut from a silicon wafer to a lead frame is employed.
For a QFP in which microelectrodes such as BGA (Ball Grid Array) are bonded, a silicon chip and a lead frame are die-bonded with a solder alloy to form a solder joint. For example, a back metal having a Ni layer as an outermost layer is formed on the silicon chip in order to improve wettability with solder and improve contact strength. However, when the outermost Ni layer is in contact with molten solder, the Ni layer is molten into the molten solder and elution of Ni occurs. Here, a barrier layer such as Ti is usually formed on the back metal in order to suppress diffusion of Ni into the silicon chip. When the Ti layer is exposed due to progress of elution of Ni, the wettability of the molten solder is repelled by the back metal because the wettability of the solder alloy to Ti is very poor. Moreover, even if a little of the Ni layer remains, Ni atoms diffuse into the molten solder and Ti hardly diffuses into the Ni. Therefore, voids increase at the atomic level at an interface between the Ti layer as the barrier layer and the Ni layer, and the contact strength at the interface between the little remaining Ni layer and the Ti layer is extremely reduced. As a result, the bonded portion after die bonding may be inferior in impact resistance and heat cycle resistance. Thus, it is extremely important with regard to die bonding to leave the Ni layer of the back metal.
Conventionally, Sn-Ag-Cu solder alloys have been widely used, and are also used for die bonding. However, when this solder alloy is used, it may be necessary to improve heat cycle resistance, impact resistance and discoloration resistance among various requirements in recent years. Therefore, in order to improve these characteristics as described above, various studies have been made on Sn-Ag-Cu solder alloys that have been widely used conventionally.
For example, Patent Document 1 discloses an Sn-Ag-Cu solder alloy containing Co and/or Ni as optional components as well as P and the like as a selective essential element. It is disclosed that this solder alloy exhibits heat cycle resistance when it contains Co and/or Ni, and exhibits impact resistance and/or discoloration resistance when it contains P. Patent Document 2 discloses that a lead-free solder includes 0.05 - 5 mass % of Ag, 0.01 - 0.5 mass % of Cu, at least one of P, Ge, Ga, Al, and Si in a total amount of 0.001 - 0.05 mass %, and a remainder of Sn. One or more of a transition element for improving resistance to heat cycles, a melting point lowering element such as Bi, In, or Zn, and an element for improving impact resistance such as Sb may be added.

Citation List

Patent Literature

Patent Document 1: JP 4144415 B
Patent Document 2: EP 1 468 777 A1

SUMMARY OF THE INVENTION

As described above, the solder alloy disclosed in Patent Document 1 is an excellent alloy which can simultaneously achieve the three kinds of effects, i.e. impact resistance, discoloration resistance, and heat cycle resistance. However, there seems to be room for further improvement with regard to alloy design.
Example 4 of Patent Document 1 discloses an alloy composition in which P, Co, and Ni are simultaneously contained in an Sn-Ag-Cu solder alloy. Additionally, Example 14 of Patent Document 1 discloses an alloy composition containing no Co as compared with the alloy composition of Example 4. Here, as described above, Patent Document 1 describes that Co and Ni are optional elements that are preferably contained in order to exhibit heat cycle resistance. Based on the fact, it is to assume that Example 4 containing both Ni and Co simultaneously has improved heat cycle resistance compared to Example 14 containing only Ni. However, the results of Example 4 and Example 14 show that the heat cycle resistance is similar. It is to assume that this is caused due to the fact that Example 14 has a Cu content of 1/10 of that of Example 4 and that Example 14 contains Sb.

Patent Document 1 further describes that Ag is an element that improves solderability, wherein Ag is intended to exhibit high impact resistance by sufficiently spreading molten solder. However, Example 3 containing more Ag than Example 4 has less impact resistance. It is to assume that this is caused by the fact that Example 3 has a higher P content than Example 4 and does not contain Co.

Although with regard to a solder alloy, each of elements has its specific significance when added to the solder alloy, the constituent elements should be contained in a well-balanced manner as a whole because the solder alloy is an integral combination of all the constituent elements and the constituent elements influence each other. For the solder alloy as described in Patent Document 1, it seems that the contents of the respective constituent elements are individually optimized, and are sufficient for obtaining the effects as described in Patent Document 1 at the time of filing the Patent Document 1. However, when another property of a solder alloy containing the same constituent elements should be improved so as to adapt to recent demands, in addition to individually optimizing the content of each constituent element, the constituent elements should be further balanced.

According to the invention described in Patent Document 1, alloy design is conducted under the assumption of a microelectrode such as a BGA, but breakage due to external stress is not negligible even when used as die bonding with a large bonded area. Therefore, it is required to improve the strength of the solder alloy itself. In addition, when performing soldering with a large bonded area such as die bonding, in addition to suppressing elution of Ni and Ni diffusion, it is required to suppress generation of voids at a bonded interface.

As described above, due to recent higher integration, increased capacity, and higher speed of electronic devices, a solder alloy that can be applied not only to BGA but also to die bonding used in QFP has been required.

An objective of the present invention is to provide a solder alloy and a solder joint which have high tensile strength, can suppress elution of Ni, and can suppress generation of voids at a bonded interface.

A solder alloy is composed of two or more types of elements, and the effects of these element types may individually affect the properties of the entire solder alloy. However, as described above, since all the constituent elements constitute an integral body, the constituent elements are related to each other. Therefore, the present inventors have focused on alloy design that enables high tensile strength and suppression of elution of Ni and generation of voids so that the alloy design can be applied not only to BGA but also to QFP even for the same constituent elements as those of the solder alloy according to Patent Document 1. Specifically, under reconsideration of the significance of adding each of the constituent elements, the present inventors conducted a detailed search for composition under consideration of the balance of each of the constituent elements in order to achieve a high tensile strength and to suppress the occurrence of elution of Ni and voids.

First, a study was conducted to suppress elution of Ni with a Sn-Ag-Cu solder alloy. The present inventors assumed that elution of Ni would be suppressed if the liquidus temperature sharply increased due to an increase in the Ni content. I.e., the present inventors have attempted an alloy design that minimizes eluting which may occur in an Ni-layer of a back metal. Specifically, a relationship between the Ni content, the temperature at which the liquidus temperature starts to rise, and the rate of increase is researched in detail so that the liquidus temperature rises sharply with only a slight increase in the Ni content of the molten solder. As a result, it was found that within a certain range of the Co content, the liquidus temperature starts to rise when the Ni slightly increases, wherein the increase sharply occurs. Therefore, the present inventors have focused on the fact that the content ratio of Co and Ni is required to suppress elution of Ni.

Next, in order to suppress the generation of voids at a bonded interface, the present inventors focused on the P content. P is known to take in oxygen in the atmosphere when coexisting with Sn to form tin phosphate. Tin phosphate is formed as a brittle and thin oxide film on a surface of the molten solder. This oxide film can be easily broken by convection of the molten solder itself and/or an external pressure applied to the molten solder when placing the chip on the molten solder, so that the oxide film may not block convection of the molten solder. For this reason, it is possible in the solder alloy containing P to discharge voids generated at a bonded interface to the outside. In order to suppress elution of Ni and generation of voids, Co, Ni, and P should be blended in a well-balanced manner.

Furthermore, since the addition of Ag precipitates $Ag_3Sn$ at a crystal grain boundary and improves the strength of the solder alloy, it is necessary to further consider the balance of the Ag content.

Therefore, the present inventors have studied Sn-Ag-Cu-Ni-Co-P solder alloy in detail under consideration of a total balance of a content ratio of Co and Ni, the P content and the Ag content. As a result, the present inventors have found that they show high tensile strength and suppress the generation of elution of Ni and voids, thereby completing the present invention.

The present invention obtained based on these findings is as described in the appended claims.

BRIEF DESCRIPTION OF THE DRAWINGS

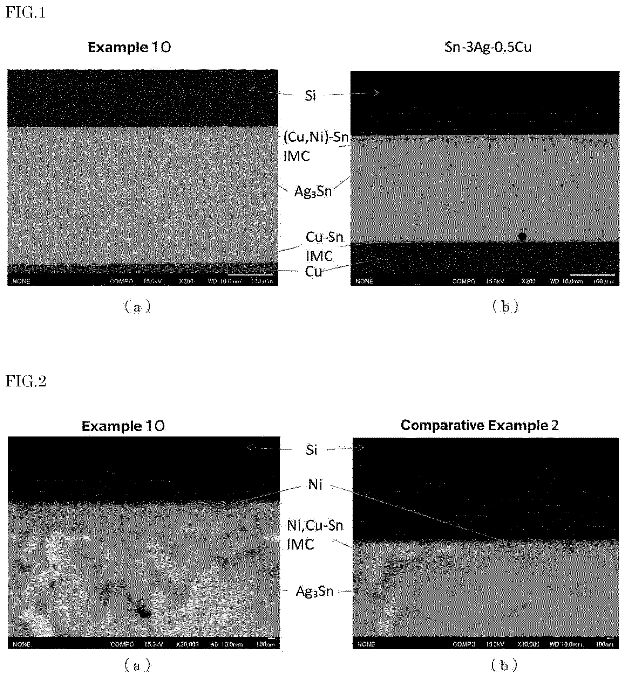

Fig.1 is a cross-sectional SEM photograph of a solder joint, wherein Fig. 1A is a cross-sectional SEM photograph of a solder joint with an alloy composition of Example 10, and Fig. 1B is a cross-sectional SEM photograph of a solder joint with an alloy composition of Sn-3Ag-0.5Cu as a comparative reference example.

Fig. 2 is a cross-sectional SEM photograph of the solder joint, wherein Fig. 2A is a cross-sectional SEM photograph of the solder joint with the alloy composition of Example 10, and Fig.2B is a cross-sectional SEM photograph of a solder joint with an alloy composition of Comparative Example 2.

DETAILED DESCRIPTION OF THE INVENTION

The present invention is described in more detail below. In the present specification, the unit "%" for the solder alloy composition refers to "mass%" unless otherwise specified.

1. Alloy composition

(1) Ag: 1 to 4%

Ag is an element that improves the strength of the solder alloy by precipitating fine $Ag_3Sn$ at crystal grain boundaries. If the Ag content is less than 1%, an effect of adding Ag is not sufficiently exhibited. The lower limit of the Ag content is 1% or more, preferably 1.5% or more, and more preferably 2% or more. On the other hand, when the Ag content is too large, coarse $Ag_3Sn$ is precipitated, as a result, the strength is reduced. The upper limit of the Ag content is 4% or less, preferably 3.5% or less, and more preferably 3% or less.

(2) Cu: 0.1 to 1.0%

Cu is an element that can suppress elution of Cu and enable precipitation strengthening by $Cu_6Sn_5$. If the Cu content is less than 0.1%, a small amount of $Cu_6Sn_5$ and a brittle SnNi compound are precipitated, as a result, the solder alloy itself becomes brittle. The lower limit of the Cu content is 0.1% or more, preferably 0.2% or more, more preferably 0.3% or more, further preferably 0.4% or more, and particularly preferably 0.5% or more. On the other hand, if the Cu content exceeds 1.0%, the liquidus temperature of the solder alloy is high and it is difficult to melt. The upper limit of the Cu content is 1.0% or less, preferably 0.8% or less, more preferably 0.7% or less, and particularly preferably 0.6% or less.

(3) Ni: 0.005 to 0.09%

Ni is an element that can control a liquidus temperature of the solder alloy and suppress elution of Ni similarly to Cu. If the Ni content is less than 0.005%, the effect of adding Ni is difficult to exhibit. The lower limit of the Ni content is 0.005% or more, preferably 0.01% or more, more preferably 0.02% or more, further preferably 0.03% or more, and particularly preferably 0.04% or more. On the other hand, if the Ni content exceeds 0.09%, the liquidus temperature of the solder alloy is high and difficult to melt. The upper limit of the Ni content is 0.09% or less, and preferably 0.07 % or less.

(4) Co: 0.0025 to 0.1%

Co is an element that controls the liquidus temperature of the solder alloy and contributes to refinement of a structure of the solder alloy. When Co coexists in the presence of Ni, the liquidus temperature is increased even with a small amount of Nicontent and elution of Ni can be suppressed. If the Co content is less than 0.0025%, the effect of adding Co is difficult to exhibit. The lower limit of the Co content is 0.0025% or more, preferably 0.005% or more, more preferably 0.01% or more. On the other hand, if the Co content exceeds 0.1%, the liquidus temperature of the solder alloy is high and it is difficult to melt. The upper limit of the Co content is 0.1% or less, preferably 0.09% or less, more preferably 0.08% or less, further preferably 0.05% or less, particularly preferably 0.04% or less, most preferably 0.03% or less, and most optimally 0.02% or less.

(5) P: 0.001 to 0.015%

P is an element that can inhibit formation of strong tin oxide because of forming tin phosphate in a solder alloy with Sn as a main component and improve wettability. If P is not contained, tin oxide is formed on a surface of the molten solder. Since tin oxide is strong and hard to break, the molten solder is moved to convection inside the tin oxide, and voids generated at a bonded interface may not be removed to the outside. On the other hand, P added into the solder alloy reacts with O in the atmosphere and Sn in the molten solder to form a brittle and thin oxide film on a surface of the molten solder. Since this oxide film is brittle, it is easily broken by convection of the molten solder itself or external force applied from a chip when the chip is mounted. In this manner, voids generated at the bonded interface are removed to the outside with the convection of the molten solder.

If the P content is less than 0.001%, tin oxide is generated, so that the above-mentioned effects are difficult to exhibit. The lower limit of the P content is 0.001% or more, preferably 0.002% or more. On the other hand, if the P content is too large, the liquidus temperature is high and it is difficult to melt. The upper limit of the P content is 0.015% or less, preferably 0.01% or less, more preferably 0.007% or less, and particularly preferably 0.005% or less.

(6) Balance: Sn

A Balance of the solder alloy according to the present invention is Sn. Unavoidable impurities may be contained in addition to the aforementioned elements. Even if unavoidable impurities are contained, the effects as described above are not affected.

(7) Formulas (1) and (2)

The present invention satisfies the following formula (1):

$$0.00020 < (\mathrm{Ni} / \mathrm{Co}) \cdot (1 / \mathrm{Ag}) \cdot \mathrm{P} \le 0.01667 \qquad (1)$$

In the above formula (1), Ni, P, Ag and Co each represent its content (mass%) of the alloy composition.

The solder alloy of the present invention can exhibit high tensile strength and suppress elution of Ni and voids because the balance of Ni, Co, Ag, and P contents is optimized by satisfying the formula (1).

For the Sn-Ag-Cu-Ni-Co-P solder alloy according to the present invention, the balance between the contents of Ni, Co, Ag, and P should be considered in order to achieve high tensile strength and suppression of elution of Ni and void generation simultaneously.

More specifically, regarding elution of Ni, elution of Ni from the Ni layer can be suppressed if the liquidus temperature sharply increases with only a slight increase in the Ni content in the molten solder. When Co and Ni coexist, if the Ni content increases slightly, the liquidus temperature sharply increases. By utilizing this phenomenon, it is possible to minimize elution of Ni even when a slight elution of Ni in the Ni layer occurs into the molten solder.

As for voids, it is necessary to pay attention to the properties of the oxide film formed on a surface of the molten solder and void discharging function by convection of the molten solder should be exhibited. For maintaining this void discharge function, it is conceivable to prevent an oxide film from being formed on the surface of the molten solder. However, since normal soldering is performed in the atmosphere, it is difficult to suppress formation of the oxide film itself. In a solder alloy with Sn as a main component, a strong tin oxide film is formed on the surface of the molten solder during melting, and even if convection of the molten solder occurs, tin oxide film inhibits discharge of voids generated at the bonded interface. In contrary, in a solder alloy containing P, although a tin phosphate film is formed on a surface of the molten solder, the tin phosphate film is thin and brittle and is broken by the convection itself of the molten solder. Thus, the void discharge function by convection is maintained. As a result, generation of voids is suppressed.

Further, the present invention should improve the strength of the solder alloy. Formation of Ag$_3$Sn by adding Ag improves the strength of the solder alloy, and simultaneously, refinement of the alloy structure by Co improves the strength of the solder alloy. If one of them is too much, the liquidus temperature rises, for example, it does not melt at about 240 °C, so that a solder joint cannot be formed. If one of them is too little, the strength of the solder alloy cannot be achieved. In addition, an amount of precipitated Ag$_3$Sn in the solder alloy according to the present invention, which depends on whether Ag-content is within the range, may further depend directly or indirectly on the balance of these elements due to the properties of the alloy. It is to be noted that, for the solder alloy according to the present invention, it is not necessary to consider Cu in the formula (1), since precipitation strengthening by Cu$_6$Sn$_5$ does not contribute as much as strength improvement by Ag$_3$Sn.

Consequently, the solder alloy according to the present invention should satisfy the formula (1) in order to achieve the three factors at the same time, i.e. high tensile strength, suppression of elution of Ni, and suppression of void generation. Even if the Sn-Ag-Cu-Ni-Co-P solder alloy is used, at least one of the above effects cannot be achieved as long as the formula (1) is not satisfied.

The lower limit of the formula (1) is more than 0.00020, preferably 0.00042 or more, 0.00063 or more, 0.00074 or more, 0.00150 or more, 0.00167 or more, 0.00208 or more, 0.00250 or more, 0.00292 or more, 0.00333 or more, 0.00389 or more.

On the other hand, the upper limit of the formula (1) is 0.01667 or less, preferably 0.01500 or less, 0.01333 or less, 0.01167 or less, 0.01000 or less, 0.00833 or less, 0.00667 or less.

In order to more sufficiently exhibit the effect of the formula (1), the formula (1) is preferably the following formula (2):

$$0.00389 \leq (Ni / Co) \cdot (1 / Ag) \cdot P \leq 0.00667 \quad (2)$$

In the above formula (2), Ni, P, Ag and Co represent the contents (mass%) of the alloy composition, respectively.

(8) Liquidus temperature, solidus temperature and $\Delta$T of solder alloy

The solder alloy according to the present invention is preferable since reduction of flowability of the molten solder is suppressed due to a different precipitated state of a solid phase although the solder alloy has a higher liquidus temperature than Sn-Ag-Cu solder alloy, so that voids can be discharged to the outside by convection of the molten solder. The liquidus temperature is preferably 320 °C or lower, more preferably 290 °C or lower, further preferably 270 °C or lower, particularly preferably 250 °C or lower, and most preferably 240 °C or less. The liquidus temperature of 240 °C or lower is preferable since soldering can be performed at a heating temperature of about 240 °C which is similar to that of an Sn-Ag-Cu solder alloy which is conventionally widely used.

The solidus temperature of the solder alloy according to the present invention is not particularly limited. It is sufficient that the solidus temperature is at least 200 °C or more in order that $\Delta$T does not become too large, wherein $\Delta$T is defined as a temperature difference between the liquidus temperature and the solidus temperature.

Further, when $\Delta$T is within a certain range, the solid-liquid coexistence region is narrow, which is preferable for the reason that segregation of the alloy structure during solidification etc. can be suppressed. The range of $\Delta$T is preferably 120 °C or less, 116° C or less, 102 °C or less, 101 °C or less, 100 °C or less, 93 °C or less, 65 °C or less, 64 °C or less, 54 °C or less, 48 °C or less, 47° C or less, 41° C or less, 36° C or less, 34 °C or less, 32 °C or less, 31 °C or less, 27 °C or less, 20 °C or less.

3. Solder Joint

The solder joint according to the present invention is suitable for connection between an IC chip for a semiconductor package and its substrate (interposer), or for connection between the semiconductor package and a printed wiring board. Here, the term "solder joint" is defined as a connection part between an IC chip and a substrate, and the connection part includes a connection for an electrode or a connection between a die and the substrate.

4. Others

A bonding method using a solder alloy according to the present invention may be performed according to an ordinary method e.g. using a reflow method. The heating temperature may be appropriately adjusted depending on a heat resistance of the chip or the liquidus temperature of the solder alloy. About 240 °C is preferable as the heating temperature from the viewpoint of suppressing thermal damage to the chip. A melting temperature of the solder alloy for performing flow soldering may be approximately 20 °C higher than the liquidus temperature. When bonding with the solder alloy according to the present invention, the structure can be further refined by considering a cooling rate during solidification. For example, the solder joint is cooled at a cooling rate of 2-3 °C/s or higher. Other bonding conditions can be appropriately adjusted depending on the alloy composition of the solder alloy.

The solder alloy according to the present invention enables a low $\alpha$-ray alloy to be produced by using a low $\alpha$ ray material as a raw material therefor. When such a low $\alpha$-ray-alloy is used for forming solder bumps in the periphery of a memory, soft errors can be suppressed.

For the solder alloys constituted from alloy compositions as shown in Table 1, the liquidus temperature, the solidus temperature, elution of Ni, and occurrence of voids were evaluated as follows. The tensile strength was also evaluated.

(1) Liquidus temperature and solidus temperature

Each solder alloy as shown in Table 1 was prepared, and the melting temperature of the solder was measured. The measurement of the solidus temperature was performed according to JIS (Japanese Industrial Standard) Z3198-1. The liquidus temperature was measured, instead of JIS Z3198-1, with a method with DSC which is similar to the measurement method for a solidus temperature according to JIS Z3198-1.

(2) elution of Ni

A preform with a thickness of 250 $\mu$m and made of an alloy composition as shown in Table 1 was mounted on a Cu lead frame. Thereafter, an IC chip with a back metal on the side of a substrate bonded surface of a silicon chip of 5 mm $\times$ 5 mm $\times$ 200 $\mu$m$^t$ was mounted on the solder alloy. The back metal is obtained by sequentially stacking a 0.05 $\mu$m Ti layer as a barrier layer, and a 0.20 $\mu$m Ni layer. The mounting was performed in such an orientation that in the IC chip with the back metal, the Ni layer was in contact with the solder alloy. A substrate with the solder alloy and the IC chip mounted thereon was heated in a reflow furnace so that the peak temperature is 240 °C for performing die bonding.
Then, a cross section of an obtained lead frame was zoomed up by a factor of 30000 on a SEM monitor, and an average value of a film thickness of an Ni layer was calculated for arbitrary 10 locations. In the Table, an average value of the film thickness which is 40% or more of an initial film thickness was classified as "◎", the average value of 20% or more as "o", and the average value of less than 10% as "×".

(3) Void

For the cross section of the lead frame prepared in the above (2), a radiograph of the solder bonded section was taken using an X-ray radioscopic device. Then, an area ratio of voids generated at a solder joint interface was calculated. In the Table, an average value of the void area ratio which is 10% or less was classified as good (o), the average value of 10 to 25% as relatively poor ($\Delta$), and the average value over 25% classified as bad (x).

Table 1:

| | Alloy Composition [mass%] | | | | | | Formula (1) | Solidus Temperature [°C] | Liquidus Temperature [°C] | Liquidus Temperature ΔT[K] [°C] | Elution of Ni | Void |
|---|---|---|---|---|---|---|---|---|---|---|---|---|
| | Sn | Ag | Cu | Ni | Co | P | | | | | | |
| Example 1 | Bal. | 3.00 | 0.4 | 0.01 | 0.01 | 0.005 | 0.00167 | 218 | 221 | 3 | ○ | ○ |
| Example 2 | Bal. | 3.00 | 0.4 | 0.03 | 0.01 | 0.005 | 0.00500 | 218 | 222 | 4 | ○ | ○ |
| Example 3 | Bal. | 3.00 | 0.5 | 0.04 | 0.01 | 0.005 | 0.00067 | 218 | 222 | 4 | ○ | ○ |
| Example 4 | Bal. | 3.00 | 0.4 | 0.05 | 0.01 | 0.005 | 0.00833 | 218 | 222 | 4 | ○ | ○ |
| Example 5 | Bal. | 3.00 | 0.4 | 0.06 | 0.01 | 0.005 | 0.01000 | 218 | 250 | 32 | ○ | ○ |
| Example 6 | Bal. | 3.00 | 0.5 | 0.08 | 0.01 | 0.005 | 0.01333 | 218 | 259 | 41 | ○ | ○ |
| Example 7 | Bal. | 3.00 | 0.5 | 0.01 | 004 | 0.005 | 0.00042 | 218 | 222 | 4 | ○ | ○ |
| Example 8 | Bal. | 3.00 | 0.5 | 0.02 | 0.04 | 0.005 | 0.00083 | 218 | 222 | 4 | ○ | ○ |
| Example 9 | Bal. | 3.00 | 0.4 | 0.03 | 0.02 | 0.005 | 0.00250 | 218 | 222 | 4 | ○ | ○ |
| Example 10 | Bal. | 3.00 | 0.5 | 0.03 | 0.02 | 0.003 | 0.00150 | 218 | 222 | 4 | ○ | ○ |
| Example 11 | Bal. | 3.00 | 0.5 | 0.04 | 0.01 | 0.003 | 0.00400 | 218 | 222 | 4 | ○ | ○ |
| Example 12 | Bal. | 3.00 | 0.5 | 0.05 | 0.01 | 0.003 | 0.00500 | 218 | 238 | 20 | ○ | ○ |
| Example 13 | Bal. | 3.00 | 0.5 | 0.04 | 0.02 | 0.005 | 0.00333 | 218 | 245 | 27 | ○ | ○ |
| Example 14 | Bal. | 3.00 | 0.4 | 0.05 | 0.02 | 0.005 | 0.00417 | 218 | 249 | 31 | ○ | ○ |
| Example 15 | Bal. | 3.00 | 0.5 | 0.07 | 0.03 | 0.005 | 0.00389 | 218 | 265 | 47 | ○ | ○ |
| Example 16 | Bal. | 3.00 | 0.5 | 0.07 | 0.03 | 0.005 | 0.00389 | 218 | 265 | 47 | ○ | ○ |
| Example 17 | Bal. | 3.00 | 0.4 | 0.03 | 0.08 | 0.005 | 0.00063 | 218 | 252 | 34 | ○ | ○ |
| Example 18 | Bal. | 3.00 | 0.4 | 0.04 | 0.09 | 0.005 | 0.00074 | 218 | 272 | 54 | ○ | ○ |
| Example 19 | Bal. | 3.00 | 0.5 | 0.05 | 0.05 | 0.005 | 0.00167 | 218 | 334 | 116 | ○ | ○ |
| Example 20 | Bal. | 3.00 | 0.7 | 0.03 | 0.01 | 0.005 | 0.00500 | 218 | 252 | 34 | ○ | ○ |
| Example 21 | Bal. | 3.00 | 0.7 | 0.05 | 0.01 | 0.005 | 0.00833 | 218 | 266 | 48 | ○ | ○ |
| Example 22 | Bal. | 3.00 | 0.7 | 0.09 | 0.01 | 0.005 | 0.01500 | 218 | 283 | 65 | ○ | ○ |
| Example 23 | Bal. | 3.00 | 0.7 | 0.03 | 0.03 | 0.005 | 0.00167 | 217 | 253 | 36 | ○ | ○ |
| Example 24 | Bal. | 3.00 | 0.7 | 0.05 | 0.04 | 0.005 | 0.00208 | 218 | 282 | 64 | ○ | ○ |

| | Alloy Composition [mass%] | | | | | | Formula (1) | Solidus Temperature [°C] | Liquidus Temperature | $\Delta T[K]$ [°C] | Elution of Ni | Void |
|---|---|---|---|---|---|---|---|---|---|---|---|---|
| | Sn | Ag | Cu | Ni | Co | P | | | | | | |
| Example 25 | Bal. | 3.00 | 0.7 | 0.07 | 0.03 | 0.005 | 0.00389 | 218 | 311 | 93 | ○ | ○ |
| Example 26 | Bal. | 1.00 | 0.7 | 0.07 | 0.03 | 0.005 | 0.01167 | 218 | 318 | 100 | ○ | ○ |
| Example 27 | Bal. | 3.00 | 0.1 | 0.07 | 0.03 | 0.005 | 0.00389 | 218 | 320 | 102 | ○ | ○ |
| Example 28 | Bal. | 4.00 | 0.5 | 0.07 | 0.03 | 0.005 | 0.00292 | 218 | 319 | 101 | ○ | ○ |
| Example 29 | Bal. | 3.00 | 0.5 | 0.05 | 0.005 | 0.005 | 0.01667 | 218 | 225 | 7 | ○ | ○ |
| Example 30 | Bal. | 3.00 | 0.4 | 0.01 | 0.01 | 0.015 | 0.00500 | 218 | 222 | 4 | ○ | ○ |
| Example 31 | Bal. | 3.00 | 1 | 0.04 | 0.01 | 0.003 | 0.00400 | 218 | 270 | 52 | ○ | ○ |
| Comparative Example 1 | Bal. | 1.00 | 0.5 | 0.05 | 0.01 | 0015 | <u>0.07500</u> | 218 | 226 | 8 | ○ | × |
| Comparative Example 2 | Bal. | 3.00 | 0.5 | 0.005 | 0.01 | 0.001 | <u>0.00017</u> | 218 | 222 | 4 | × | ○ |
| Comparative **Example 3** | Bal. | 3.00 | 0.5 | 0.05 | 0.2 | 0.003 | 0.00025 | 218 | 500over | - | - | - |
| Comparative Example 4 | Bal. | <u>0.10</u> | 0.5 | 0.01 | 0.02 | 0.003 | 0.01500 | 228 | 233 | 5 | ○ | ○ |
| **Comparative** Example 5 | Bal. | <u>5.00</u> | 0.5 | 0.03 | 0.02 | 0.003 | 0.00090 | 218 | 245 | 27 | ○ | ○ |
| Comparative Example 6 | Bal. | 3.00 | 0.5 | <u>0.001</u> | 0.02 | 0.015 | 0.00025 | 218 | 222 | 4 | × | ○ |
| Comparative Example 7 | Bal. | 3.00 | 0.5 | <u>1</u> | 0.1 | 0.003 | 0.01000 | 218 | 500over | - | - | - |
| Underlines indicate that corresponding data are not included within the scope of the present invention. | | | | | | | | | | | | |

EP 3 708 291 B1

As shown in Table 1, according to Examples 1 to 31, the content of each constituent element and the formula (1) were satisfied for all the alloy compositions, whereby elution of Ni and voids at bonded interfaces were not observed. In addition, it was also confirmed that they exhibited higher tensile strength than Comparative Examples 1 to 7.

On the other hand, according to Comparative Example 1, the contents of Ag, Co, P, and Ni were not well-balanced due to exceeding the upper limit of the formula (1), so that voids were generated. According to Comparative Example 2, the balance of the contents of Ag, Co, P, and Ni was poor because the lower limit of the formula (1) was not reached, so that the Comparative Example 2 was inferior with regard to elution of Ni.

Comparative Example 3 was not evaluated because the liquidus temperature was high due to high Co content and a solder joint could not be formed. For Comparative Example 4, it was confirmed that a small amount of $Ag_3Sn$ was precipitated due to low Ag-content, and that the tensile strength was low as compared with that of Examples 1 to 31. For Comparative Example 5, it was confirmed that coarse $Ag_3Sn$ was precipitated due to too high Ag content, and that the tensile strength was low as compared with that of Examples 1 to 31.

For Comparative Example 6, elution of Ni could not be suppressed because the Ni content was small. Comparative Example 7 was not evaluated because the liquidus temperature was high due to too high Ni content and a solder joint could not be formed.

In order to make the effect of the present invention clear from the results in Table 1, further description will be given with reference to Figs.1 and 2.

Fig. 1 is a cross-sectional SEM photograph of a solder joint, wherein Fig. 1A is a cross-sectional SEM photograph of a solder joint with the alloy composition of Example 10, and Fig. 1B is a cross-sectional SEM photograph of a solder joint with an alloy composition of Sn-3A-0.5Cu as a Comparative Example. "Si" in each of the SEM photographs represents an Si chip, wherein the used chip had a Ni layer formed on an outermost surface. It was found that a smaller amount of (Cu, Ni) Sn intermetallic compound according to Fig. 1A was precipitated than in Fig. 1B. It is assumed that this was a result from eluting of the Ni-layer by the molten solder during bonding because the alloy composition of the Comparative Example did not contain Ni and did not satisfy the formula (1). Although it cannot be confirmed in Fig. 1, it was also confirmed by enlarging the taken SEM photographs that the Ni layer remains in Fig. 1A, whereas the Ni layer hardly remains in Fig. 1B.

Fig.2 is a cross-sectional SEM photograph of the solder joint, wherein Fig. 2A is a cross-sectional SEM photograph of the solder joint with the alloy composition of Example 10, and Fig. 2B is a cross-sectional SEM photograph of the solder joint with the alloy composition of Comparative Example 2. A zoom factor of the SEM photographs is 30,000. It was found that the Ni layer remained in Example 10 shown in Fig. 2A, whereas the Ni layer hardly remained in Comparative Example 2 shown in Fig. 2B. In Fig. 2A, it was found that a film thickness of the Ni layer was 0.09 $\mu$m. Since this film thickness was 40% or more of a film thickness of the Ni layer before soldering, this shows that the Ni layer practically remained. On the other hand, in Fig. 2B, it was found that a film thickness of the Ni layer was 0.015 $\mu$m. Since this film thickness was less than 10% of a film thickness of the Ni layer before soldering, this shows that eluting of the Ni layer was caused by the molten solder.

Based on these facts, the solder alloy according to the present invention has high tensile strength, can suppress elution of Ni, and can suppress generation of voids at bonded interfaces, which enables high-quality die bonding.

**Claims**

1. Solder alloy having an alloy composition comprising Ag: 1 to 4%, Cu: 0.1 to 1.0%, Ni: 0.005 to 0.09%, Co: 0.0025 to 0.1%, P: 0.001 to 0.015 % by mass% and Sn as a balance, wherein the alloy composition fulfills the following formula (1):

$$0.00020 < (\text{Ni} / \text{Co}) \cdot (1 / \text{Ag}) \cdot \text{P} \leq 0.01667 \qquad (1),$$

   wherein Ni, P, Ag and Co in the formula (1) represent contents, in mass%, of the alloy composition respectively.

2. The solder alloy according to claim 1, wherein the alloy composition fulfills the following formula (2):

$$0.00389 \leq (\text{Ni} / \text{Co}) \cdot (1 / \text{Ag}) \cdot \text{P} \leq 0.00667 \qquad (2),$$

   wherein Ni, P, Ag and Co in the formula (2) represent contents, in mass%, of the alloy composition respectively.

3. A solder joint comprising the solder alloy according to any one of claims 1 or 2.

**Patentansprüche**

1. Lötlegierung mit einer Legierungszusammensetzung, die Ag: 1 bis 4%, Cu: 0,1 bis 1,0%, Ni: 0,005 bis 0,09%, Co: 0,0025 bis 0,1%, P: 0,001 bis 0,015% in Masse-% und Sn als Rest umfasst, wobei die Legierungszusammensetzung die folgende Formel (1) erfüllt:

$$0,00020 < (\text{Ni} / \text{Co}) \cdot (1 / \text{Ag}) \cdot \text{P} \leq 0,01667 \qquad (1),$$

wobei Ni, P, Ag und Co in der Formel (1) jeweils die Gehalte, in Masse-%, der Legierungszusammensetzung darstellen.

2. Die Lötlegierung nach Anspruch 1, wobei die Legierungszusammensetzung die folgende Formel (2) erfüllt:

$$0,00389 \leq (\text{Ni} / \text{Co}) \cdot (1 / \text{Ag}) \cdot \text{P} \leq 0,00667 \qquad (2),$$

wobei Ni, P, Ag und Co in der Formel (2) jeweils die Gehalte, in Masse-%, der Legierungszusammensetzung darstellen.

3. Lötstelle mit einer Lötlegierung nach einem der Ansprüche 1 oder 2.


**Revendications**

1. Alliage de brasage ayant une composition d'alliage comprenant Ag : 1 à 4 %, Cu : 0,1 à 1,0 %, Ni : 0,005 à 0,09 %, Co : 0,0025 à 0,1 %, P : 0,001 à 0,015 % en % en masse et Sn pour le reste, dans lequel la composition d'alliage satisfait à la formule (1) suivante :

$$0,00020 < (\text{Ni}/\text{Co}) \cdot (1/\text{Ag}) \cdot \text{P} \leq 0,01667 \qquad (1),$$

dans lequel Ni, P, Ag et Co dans la formule (1) représentent le contenu, en % en masse, de la composition d'alliage respectivement.

2. Alliage de brasage selon la revendication 1, dans lequel la composition d'alliage satisfait à la formule (2) suivante :

$$0,00389 \leq (\text{Ni}/\text{Co}) \cdot (1/\text{Ag}) \cdot \text{P} \leq 0,00667 \qquad (2),$$

dans lequel Ni, P, Ag et Co dans la formule (2) représentent le contenu, en % en masse, de la composition d'alliage respectivement.

3. Brasure comprenant l'alliage de brasage selon l'une quelconque des revendications 1 ou 2.

FIG.1

**Example 10**

(a)

Sn-3Ag-0.5Cu

(b)

FIG.2

**Example 10**

(a)

**Comparative Example 2**

(b)

**EP 3 708 291 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4144415 B
- EP 1468777 A1